# EUROPEAN PATENT APPLICATION

(11) **EP 1 271 956 A1**
(43) Date of publication of application: **02.01.2003**
(21) Application number: 01460040.7
(22) Date of filing: 20.06.2001
(51) Int. Cl.: H04N 7/26, G06F 17/30

(54) **Method and system for the conversion of XHTML/HTML documents to MPEG-4 documents**

(71) Applicant: Thomson Licensing S.A., 92100 Boulogne-Billancourt (FR)
(72) Inventor: Sahuc, David, Thomson multimedia, 92648 Boulogne Cedex (FR); Blonde, Laurent, Thomson multimedia, 92648 Boulogne Cedex (FR); Olivier, Yannick, Thomson multimedia, 92648 Boulogne Cedex (FR); Kervella, Gwenael, Thomson multimedia, 92648 Boulogne Cedex (FR); Kerbellec, Amélie, Thomson multimedia, 92648 Boulogne Cedex (FR)
(74) Representative: Kohrs, Martin

(57) **Abstract**

The invention is related to a device to convert HTML data into MPEG-4 data comprising
- means to generate a structure of the HTML data and of the HTML data linked to said HTML data,
According to the invention, the device comprises:
- means to convert the HTML page and frame layout into MPEG4 layout,
- means to convert the HTML data into MPEG-4 nodes.

## Description

The invention concerns a device and a method to convert HTML (standing for "Hypertext Markup Language") data into MPEG-4 (MPEG standing for "Motion Picture Expert Group") data.

More generally, the domain of the invention is the domain of multimedia.

For many years, the use of Internet for the distribution of information has been done using data in a standard format called HTML and now XHTML (standing for "Extensible Hypertext Markup Language"). This format being a textual format, its transmission is not efficient.

Throughout the whole text, HTML stands also for XHTML.

Meanwhile, the MPEG working group has been working on the compression and transmission of audio-visual content in MPEG-1 and MPEG-2 standards. The first one was mainly dedicated to the containment of video films on a single CD-ROM called video-CD. The quality was poor but acceptable for the computing capacity of personal computers. MPEG-2 is mainly dedicated for the broadcast of audio-visual data on wideband platforms (cable, satellite, etc.).

The global bandwidth capacity of Internet being improved since a few years has made possible the convergence of digital TV and Internet. The standard enabling such transmission is called MPEG-4.

MPEG-4 standard does not specify the transport means of MPEG-4 information but specify how data have to be compressed and encapsulated in order to be composed on an MPEG-4 platform.

MPEG-4 data are of different types and can be:
- binary compressed data, called BIFS, (standing for Binary Format for Scene) sent through streams.
- audio data, video data in a natural way but also in a synthetic form : 2D and 3D geometrical objects, synthetic sound, etc..

These data are composed into a scene. MPEG-4 enables the description of user interactivity and objects animation and updates.

The MPEG-4 objects are composed of nodes describing the MPEG-4 scene. Nodes can represent geometrical objects, pictures, sounds or videos.

XHTML/HTML documents are standardized textual files. They are composed of elements described into HTML DTD (standing for "Document Type Definition") and CSS (standing for "Cascading Style Sheets") that can be found in the HTML specification document.

All these HTML elements define the structure of the XHTML/HTML page. Such a page can contain or can include embedded links to other web pages, pictures, sounds and videos. There is also a limited interactivity language called JavaScript that can be embedded in the document.

The development of Internet and of the multimedia has increased the amount of data exchanged between terminals of any kind such as personal computers, set-top boxes. Even if the general Internet bandwidth has been increased, the volume of data transmitted increases also in a considerable manner as more and more users are connected to the Internet and more and more complex and high quality data are exchanged.

Moreover, the development of multimedia applications is linked to the development of Internet, the World Wide Web being a common source of multimedia data.

So, the invention increases the convergence of multimedia and of Internet by providing a device enabling to display the content of HTML information on an MPEG-4 platform.

The object of the invention is a device to treat HTML information including data and at least one page and its associated frame layout, comprising
- means to generate a structure of the HTML data,

According to the invention, the device comprises
- means to convert the HTML page and its associated frame layout into MPEG4 layout,
- means to convert the HTML data into MPEG-4 nodes.

The HTML formats and MPEG-4 formats do not address the same types of terminals and thereby are completely different, especially in terms of layout. By converting the HTML data into MPEG-4 data, the device enables to solve the problems of displaying HTML data on MPEG-4 terminals and especially in term of layout and visual coherence.

This device enables the user to display HTML data without using a specific browser and then the merging of native HTML data and of MPEG-4 data can be done

Having a single browser for both MPEG-4 and XHTML/HTML data can allow not disturbing the user by switching from a content to another by using two different interfaces.

The means to generate a tree structure of the HTML data are able to generate a tree structure of the associated linked data.

Moreover, on the World Wide Web, there are much more HTML data than MPEG-4 data, so that it is particularly usefull to provide a device enabling the conversion of HTML data in MPEG-4 data on platforms dedicated to display data issued from the World Wide Web.

Preferentially the means to generate a structure of the HTML data generate a tree structure of the HTML data are able to generate a tree structure of the HTML data and that the conversion means intended to convert the HTML data into MPEG-4 nodes convert the HTML tags and the cascading style sheets to Binary Information For Scene information.

The elements and the structure of these elements are different in MPEG-4 and in HTML so the device must have the means to convert the elements of the HTML document in MPEG-4 nodes and then it must also have the means to convert the page and frame layouts of the HTML document as the MPEG-4 format does not have neither frame nor page concept. This module converts the frame and page layouts of the HTML document in the MPEG two-dimensional layout so that it is possible to keep the consistency between the different media (audio, video,..) in the MPEG-4 scene and to keep the visual aspect.

Advantageously, the HTML data are standardized HTML data or browser-specific HTML data.

In this manner, any type of data can be considered and converted using the device according to the invention. Indeed, usually, the HTML files are written in view of being viewed using one dedicated type of browser or at least are preferentially viewed using certain proprietary browsers, so written using dedicated proprietary elements.

In one embodiment, the device comprises means to generate an output document from the obtained MPEG-4 layout and MPEG-4 nodes, the output document being described using the MP4 format or the XMT format.

This gives the possibility to generate a file for different purposes and not only for displaying. Namely the XMT format is a textual file and MP4 is a binary format. Some elements of the HTML document can be converted in a different way according to the chosen output file. For instance, the comments included in the HTML file can be ignored by the converter if the output file is an MP4 file and can be converted into comments if the output file is an XMT file.

The invention is also related to a multimedia system. According to the invention, it comprises :
- at least one browser to generate a request of at least one HTML document located on a remote server,
- at least one device according to any of the embodiments of the invention,
- at least one transmission link between said remote server and said device according to any of the embodiments of the invention for transferring said requested HTML document,
- at least one display to display said MPEG-4 document, said device according to any of the embodiments of the invention to convert said requested HTML document into an MPEG-4 document before transferring it to said display.

The invention is also related to a multimedia system characterized in that it includes
- a server,
- a device for displaying multimedia data,
- a device for receiving a request for an HTML document from a user,
- a transmission link being able to for connecting said server and said device for receiving the request for transmitting said request to said server,
   said server including a device according to any of the embodiments of the invention for converting said HTML document into an MPEG-4 document, said transmission link transmitting said HTML document converted into MPEG-4 to the device for displaying multimedia data.

This embodiment is particularly interesting. The inventors have noticed that as MPEG-4 data are heavily compressed, it is better to transmit textual information compressed into MPEG-4 format than to transmit HTML data. Indeed it saves bandwidth on the transmission link.

In a preferred embodiment, the server is connected to the World Wide Web and said requested HTML document is located on the World Wide Web.

The invention is also related to a method for treating HTML information including at least one page and its associated frame layout wherein
- one generates a structure of the HTML data and of the HTML data linked to said HTML data.

According to the invention,
- one converts the HTML page and frame layout into MPEG4 layout,
- one converts the HTML data into MPEG-4 nodes.

The present invention also relates to a computer program product comprising portions of software code or program instructions adapted to implement the method of claim 8 for converting HTML data into MPEG-4 data, when the computer program is executed on a computer.

A computer program product can be any computer program stored in a memory of any kind such as a CD-Rom, a floppy disk, or also a computer program downloaded from a network.

Other characteristics and advantages of the invention will appear through the description of a non-limiting embodiment of the invention, which will be illustrated, with the help of the enclosed drawings among which
- figure 1 represents a first embodiment of a multimedia system according to the invention,
- figure 2 represents a second embodiment of a multimedia system according to the invention,
- figure 3 represents the splitting up of an HTML document into an MPEG-4 document

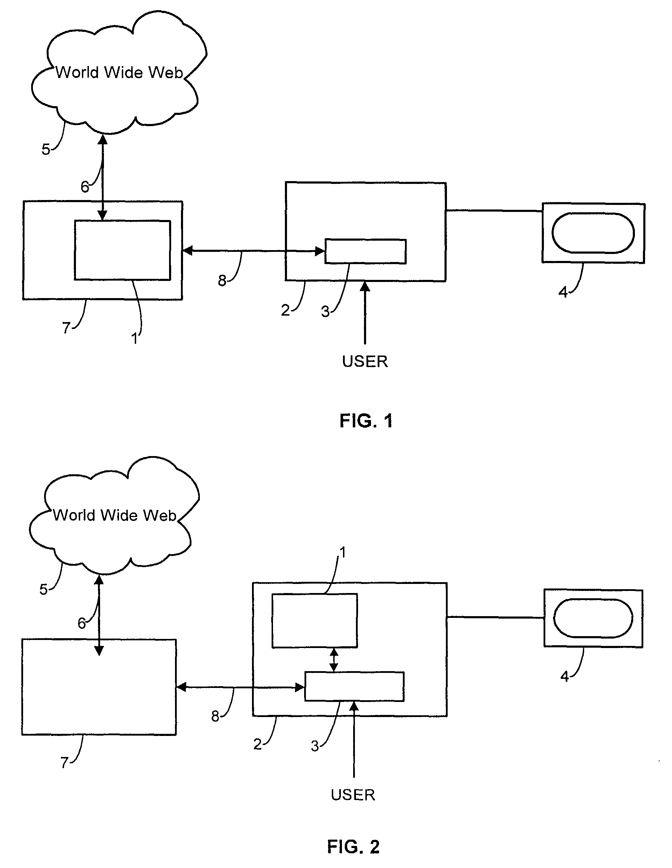

On figure 1, a server 7 includes a device 1 for converting HTML data into MPEG-4 data. The server 1 is connected to the World Wide Web 5 through transmission link 6.

Said server is also connected through transmission link 8 to the device 2 including a browser 3. The device 2 is also connected to a target platform 4. In a preferred embodiment the target platform is a display.

The device 2 can be, in a preferred embodiment, a set-top-box. It is called in this document a user terminal. The user terminal 2 includes a user interface 3, also called browser. This browser enables the user to select a multimedia file on a remote server; this multimedia file is preferentially located on the World Wide Web. The browser allows the user to select different coded types of files. The user can select native MPEG-4 data to display them on its display 4, the user can also select other coded types of files such as HTML data, thereby using the same interface.

The user sends a request for one data to the browser 3. Then, the request is transmitted to server 7 through transmission link 8. This transmission link can be for example an Ethernet link.

In the embodiment represented on figure 1 the requested HTML document is located on a server connected to the World Wide Web.

When the requested document is an HTML document, the server 7 receives the request. Depending on the location of the requested file (specified by its URL (standing for "uniform Resource Locator") address) the request is transmitted to the appropriate server on the World Wide Web through transmission link 6. The requested document and if needed, the documents linked to this requested document, are received on the server 7 and transmitted to the device 1. Device 1 converts the HTML documents into an MPEG-4 document according to the invention and detailed later in this document. The converted document is then transmitted to the user terminal 2 and transmitted to the display 4.

In this embodiment, one advantage is to have a centralized server, which makes the format conversion from HTML to MPEG-4. This avoids implementing a device according to the invention in any user terminal.

A second advantage is to transmit MPEG-4 data between the server 7 and the user terminal 2. Indeed, MPEG-4 data are compressed data whereas HTML data are not compressed, so the data rate is improved and bandwidth is saved.

Figure 2 represents another embodiment of a multimedia system according to the invention.

A user terminal 2 is connected to the World Wide Web 5 through a transmission link 6.

In this embodiment, a device 1 for converting HTML data into MPEG-4 data is located in the user terminal 2. There is no global server for centralising the conversion of HTML data into MPEG-4 data.

When a user requests an HTML document, the user terminal 2, which is connected to the World Wide Web, sends the request to the World Wide Web. The document, while received on the user terminal 2, is converted into MPEG-4 format in device 1 as described later in this document. Then the converted document is transmitted to the target platform display 4.

This embodiment has the advantage to provide to each user a device according to the invention even in a heterogeneous environment, it means no global server is needed.

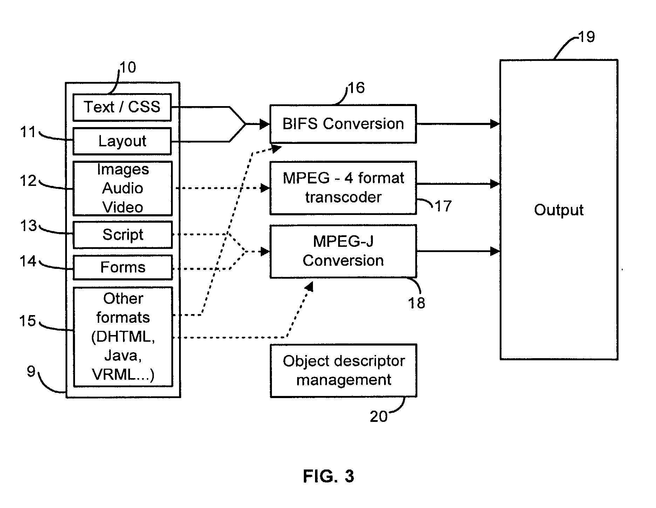

In a particular embodiment, the device 2 is a computer including a processor and memory, said memory comprising portions of software code or program instructions adapted to implement a method for converting HTML data into MPEG-4 data as described on figure 3, when the computer program is loaded into the processor. Said memory can be non-volatile memory or volatile memory or also a hard disk, a floppy disk or a CD-Rom.

The format conversion of an HTML document 9 is represented on figure 3.

An HTML document can be composed of text and Cascading Style Sheet 10 (referenced as CSS on figure 3), images, audio and video objects 12, script 13, forms 14, or other data format such as DHTML 15 (standing for "Dynamic Hypertext Markup Language"), Java data or VRML (standing for "Virtual Reality Modelling Language").

Cascading Style Sheets 10 describe how documents are presented on screens, in print, or perhaps how they are pronounced. By attaching style sheets to structured documents on the Web (e.g. HTML), authors and readers can influence the presentation of documents without sacrificing device-independence or adding new HTML tags. As XHTML extends HTML with XML language, XSL extends CSS in the same way.

The two languages complement each other and can be used together.

The text and Cascading Style Sheets 10 are converted using a BIFS conversion module 16. The images, audio and video objects can be converted into MPEG-4 using an MPEG-4 format transcoder module 17. The other data related to DHTML, Java, VRML 15 can be converted using another conversion module 18 into BIFS or MPEG-J. Conversion module 16, transcoder module 17 and MPEG-J conversion module 18 are linked in the way they have to share informations for Object Descriptor settings 20.

The device 1 converts the text, cascading style sheets into MPEG-4 nodes keeping the same visual aspect, namely converting also the layout.

When the device 1 receives the HTML requested document it parses all the pages links. In case the linked media or document is needed for further treatment, like display information, it downlads it or keeps reference on it. Specifically, for transcoding of images or sounds for example, media type and specifications have to be kept for Object Descriptor initialization.

The common structure of an HTML document can be the following:

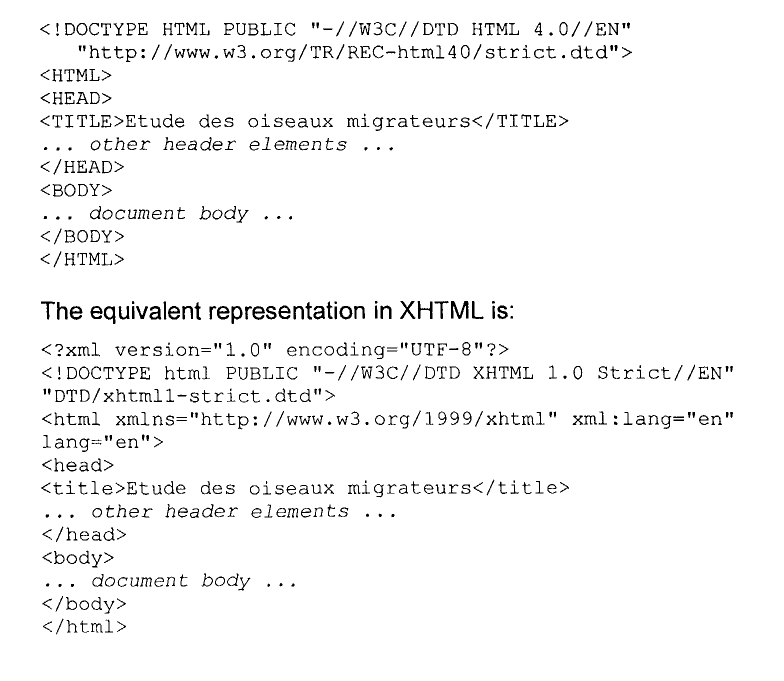

All the tags have opening tags and closing tags. An opening tag is for example <HTML> and the corresponding closing tag is </HTML>. However, in some cases, the closing tags are omitted. In this case, the converter can however make the conversion and does not generate any error. The converter makes the conversion by supposing the location of the missing closing tags.

We are now going to describe some specific elements of an HTML page.

The "!DOCTYPE" element identifies the XHTML/HTML document type. The converter checks if it manages the document type. If the document type is not correct or not manageable, the converter can suppose that either the document is an HTML document and then it tries to begin the conversion or that the document is not in HTML and then it can stop the current conversion and display an error message.

The converter initializes its internal MPEG-4 structure to a top Layer2D node, which defines the initial window frame, with default sizes (-2 for width or X size, -2 for height or Y size).

In XHTML/HTML, colors are described in two different ways:
The first way is the hexadecimal description: for example "#FF9F00". This needs a specific conversion for MPEG-4 color:
R (Red component): ((color & 0xFF0000) >> 16) / 255.
G (Green component): ((color & 0xFF00) >> 8) / 255.
B (Blue component): (color & 0xFF) / 255.

This conversion corresponds to the application of a bit mask to the HTML color ASCII value to extract red, green and blue components and a division to range them within the MPEG-4 color values.

The second way is the textual description: for example "black". These descriptions correspond to fixed hexadecimal colors. For example, "black" corresponds to "#000000" in HTML and to "0 0 0" in MPEG-4.

The "!--" element corresponds to an HTML comment. This comment is converted into an MPEG-4 comment or ignored depending on the chosen output file. If the output file is an XMT output file, this comment can be converted into an MPEG-4 comment, if the output file is an MP4 output file, this comment is ignored.

The magic targets define in MPEG-4 the frames into which the linked HTML content has to be displayed.

"_blank": The converter creates a new Layer2D (with default size) on top of all other contents. One can also replace the complete scene by the new Layer2D.

"_self": The converter replaces the current Layer2D content by the new one.

"_parent": The converter replaces the parent Layer2D content by the new one.

"_top": The converter has to replace the top Layer2D content by the new one.

These Layer2D can also be called here visual frames to make an analogy with HTML principles.

The use of such target in hyperlinks needs specific treatment like BIFS Update command, in a Conditional node for example. Another solution to manage such behavior is to put an Inline node as children of all Layer2D (frame) and then to update the content of this Inline dynamically.

A specific use of these targets is to define specific place in the HTML document thanks to the '#' character and to the HTML 'name' field. This implies having an additional Transform2D as top children of all Layer2D in order to be able to position the converted page as requested. Additionally, many Valuator or Conditional nodes are necessary to update these Transform2D translation, and PlaneSensor2D offset, in case of use of this node as scrolling feature.

XHTML/HTML defines 7 different font sizes. These font sizes are only references and do not apply to explicit display sizes. Most web browsers use a system font size of 12 as the default HTML font size (which is 3). The display sizes equivalent to these HTML font sizes, are chosen considering the display type and the capabilities of the target platforms.

The initial application settings (BIFS decoderConfigDescriptor pixelWidth, pixelHeight, pixelMetric, ...) in the IOD (standing for "Initial Object Descriptor") sizes should be used for the converter sizes but these can also be manually set.

The converter knows the display resolution (width and height) of the target platform 4 in order to be able to position the objects either dynamically or statically in the MPEG-4 scene.

In XHTML/HTML, sizes can be set using several different ways:
- pixel aligned. Example: "width=50".
- relative size. Example: "height=15%".
- Multiple, auto-size. Examples: "width=1*", "height=*".

As these sizes are not compliant with MPEG-4 size ranges and definition, they need to be converted to MPEG-4 content size, depending on the target platform application settings (display size and capabilities). This can need pixel to relative size conversion. In most cases, the converter stores global sizes, especially in the third size case.

In case the converted frames (Layer2D) width (x size) and/or height (y size) cumulative content sizes are bigger than the target platform application display sizes, the converter introduces x and/or y scrolling capabilities in the layers thanks to layer dragging or insertion of scrolling bars. This enables the user to view the whole document.

Concerning the conversion of text, the following table gives a list of HTML elements and their corresponding converted MPEG-4 nodes. This table describes conversion of single HTML elements but some can need multiple and linked MPEG-4 nodes to restore the same functionality. Moreover, some HTML elements have cumulative effects, such as font properties, and then the converter keeps status of these effects.

Some linked documents or media can be described in other format than in HTML. Specifically, when JavaScript is defined as function of field, like 'onblur', this is ignored by the converter unless it can manage it by a specific way (by MPEG-J conversion for example). In case the converter does not manage such conversion, a message is displayed at the location where the non convertible element should be placed.

The table in the annex 1 represents the conversion of some HTML elements into MPEG-4 nodes. This table gives also the method used for the conversion. The list given in this annex is non limitative.

When the verbs 'contain' or 'embed' are used in this table it means that the specified parent node possesses the given node in its children field.

In all the tables of the different annexes, MPEG-4 nodes are given in italic bold and MPEG-4 field node in italic. For example, ***Layer2D*** node and its *size* field.

An HTML document contains also some proprietary elements that have to be converted. These proprietary elements can be for instance specific to the browser used. They are not standardized and have different names according to the browser used.

The table given in annex 2 illustrates the conversion used for some of these proprietary and non standard elements. This table is not an exhaustive list of the proprietary elements.

The Cascading Style Sheet langage reference introduces the possibility to setup the default display parameters such as the color, the font. These parameters are stored and used by the converter for display purpose. The conversion of Cascading Style Sheet parameters is indicated in the annex 3. The annex 3 gives a non exhaustive list of the Cascading Style Sheet parameters.

The output file 19 can be delivered to an MPEG-4 system (client or server). This can be an MP4 binary file or can be an XMT textual file. The output media is set according to the target platform 4. If the target platform is a display, the output file 19 is an MP4 file, if the target platform is a different device, the output file 19 can be an XMT file.

### Annex 1

| **XHTML/HTML elements and parameters (attributes)** | | **MPEG-4 node - method to convert** |
|---|---|---|
| A | | The media (Text, image, etc.) contained in this element are *children* of an ***Anchor*** node. |
| | charset | Character encoding used for the address. NB: Only UTF-8 is understood by MPEG-4. |
| | type | Useful to know if linked content type can be understood by the converter before it downloads it. |
| | name | This feature needs specific treatment in order to manage it: the use of a ***Transform2D*** node on top of the embedding ***Layer2D*** is necessary as well as a ***Valuator*** node in order to position the page as requested. |
| | hreflang | Useful to know if linked content language can be understood by the converter. |
| | rel | Useful if the converter module manages pre-load of contents. |
| | rev | Useful if the converter module manages pre-load of contents. |
| | accesskey | The ***Anchor*** node can be triggered by a ***KeySensor.*** This node has not yet been standardized. This functionality is subject to change. |
| | shape | This is the transparent *children* ***Shape*** of this ***Anchor.*** |
| | coords | These are the properties of the *geometry* of the previous ***Shape.*** |
| | tabindex | Such functionality need specific conversion (MPEG-J or other) |
| | target | This is the *param* of the ***Anchor*** node. As discussed in the document, when the 'name' or 'target' features are used, this implies all ***Frame2D*** to contain an Inline node which ***DEF*** name is given by this parameter. This allows to change the URL when the content is updated by an hyperlink. |
| | onfocus | This ***Anchor*** contains a ***TouchSensor*** with ***ROUTE*** to its *isOver.* |
| | onblur | This ***Anchor*** contains a ***TouchSensor*** with ***ROUTE*** to its *isOver.* |
| | href | Address (*url* and *param* fields) of the ***Anchor*** node. |
| ABBR | | This is a ***Text*** node, or the continuity of the *string* field of the previous one. This should also be put in the ***WorldInfo*** node. |
| ACRONYM | | This is a ***Text*** node, or the continuity of the *string* field of the previous one. This should also be put in the ***WorldInfo*** node. |
| ADDRESS | | This is a ***Text*** node, or the continuity of the *string* field of the previous one, with an *ITALIC* ***FontStyle*** display. This information should also be included in the ***WorldInfo*** node. |
| APPLET | | This shall be ignored and the HTML alternate message should be displayed instead |
| AREA | | This is an ***Anchor*** node. Any ***Shape*** that it contains have to be transparent. |
| | shape | This is the transparent ***Shape*** contained in this ***Anchor.*** |
| | coords | These are the properties of the *geometry* of the previous ***Shape.*** |
| | href | Address (*url* and *param*) of the ***Anchor*** node. |
| | nohref | This ***Anchor*** does not link (no *url*) |
| | alt | This is the *description* field of the ***Anchor*** node. |
| B | | This is a new ***Text*** node, in the continuity of the previous one, if it exists, with a BOLD ***FontStyle*** display and cumulative with the style of the previous ***Text*** node. |
| BASE | | This is not a visual information. This has to be used by the converter for a different purpose. |
| | href | This means that all URLs in the XHTM/HTML document are based on the given URL. This is not a visual information but address information for the converter. |
| | target | This means that all hyperlinks **(*Anchor*** nodes) have to be displayed in a specific ***Layer2D.*** When the 'name' or 'target' features are used, this implies that all ***Frame2D*** must contain an Inline node which ***DEF*** name is given by this parameter. This allows to change the URL when the content is updated by an hyperlink. |
| BASEFONT | | These parameters have to be kept by the converter as default ***Material2D, FontStyle*** for ***Text*** nodes. This element is cumulative (i.e. it can be called several times in the web page to update values). |
| | id | This is the language of the text, can be useful at application level, for language switching. |
| | size | This is the default *size* field of the ***FontStyle.*** This size is in HTML range (1-7) and then have to be converted in pixel or relative size. |
| | color | This is the default *emissiveColor* value of the ***Material2D*** of the ***Shape*** embedding the *Text* node. The HTML color can be set with an hexadecimal value, then should need conversion. |
| | face | This is the default *family* field value of the ***FontStyle.*** |
| BDO | | This implies changes on the *LeftToRight* field of the ***FontStyle*** node. |
| | lang | This is the language of the text, can be useful at Application level, for language switching. |
| | dir | If equals to "LTR" then *LeftToRight* is TRUE, FALSE otherwise. |
| BIG | | This increases the *size* field of the ***FontStyle*** Node. The increase is of 1 in HTML, it has then to be recomputed in pixel or relative size. A new ***Text*** node has then to be created in the continuity of the previous one if it exists thanks to the ***Form*** node. |
| BLOCKQUOTE | | This creates a new ***Text*** node with same ***FontStyle*** than the previous one if it exists. This text is indented and has a blank like before and after its sentences. |
| BODY | | This delimitates the HTML header from the body (visual part). A ***Layer2D*** node has to be created. |
| | alink | This is the default *emissiveColor* value of the ***Material2D*** of the ***Shape*** embedding the *Text* node of an ***Anchor*** node on which the ***TouchSensor*** *isActive* field is TRUE. The HTML color can be set with an hexadecimal value, then should need conversion. |
| | background | This is the *url* field of the ***Background2D*** node contained in the created ***Layer2D.*** |
| | bgcolor | This is the *backColor* field of the ***Background2D*** node contained in the created ***Layer2D.*** |
| | bgproperties / nohtilebg / novtilebg | If "FIXED", the image of the ***Background2D*** is not linked by a ROUTE to the layer movements (horizontally, vertically or both). |
| | credits | This can be used in the ***WorldInfo*** node. |
| | fontsize | This is the default *size* field for all ***FontStyle*** nodes embedded in the ***Layer2D.*** This size is in HTML range (1-7) and then has to be converted in pixel or relative size. |
| | hspace | This is a value for alignment in pixel for horizontal constraints with the borders in the ***Form*** node contained at the top of the ***Layer2D*** node and for all nodes embedded in it. |
| | instructions | Can be used as the ***Anchor*** for a help button in the scene. |
| | leftmargin / marginwidth | This has the same effect than the hspace field. |
| | link | This is the default *emissiveColor* value of the ***Material2D*** of the ***Shape*** embedding the ***Text*** node of an ***Anchor*** node. The HTML color can be set with an hexadecimal value, then should need conversion. |
| | logo | This can be used at application level as application icon. |
| | vspace/ marginheight/ topmargin | This has the same effect than the hspace field but for vertical borders. |
| | onfocus | This ***Layer2D*** contains a ***TouchSensor*** with ***ROUTE to*** its *isOver.* |
| | onblur | This ***Layer2D*** contains a ***TouchSensor*** with ***ROUTE*** to its *isOver.* |
| | onload | This ***Layer2D*** contains a ***VisibilitySensor*** with ***ROUTE*** to its *enterTime.* |
| | onunload | This ***Layer2D*** contains a ***VisibilitySensor*** with ***ROUTE*** to its *exitTime.* |
| | text | This is the default *emissiveColor* value of the ***Material2D*** of all ***Shape*** nodes embedding any ***Text*** node. The HTML color can be set with an hexadecimal value, then should need conversion. |
| | vlink | This is the default *emissiveColor* value of the ***Material2D*** of the ***Shape*** embedding the ***Text*** node of an already selected ***Anchor*** node. The HTML color can be set with an hexadecimal value, then should need conversion. This can only be implemented if the converter can store a certain number of already visited links to get their status. |
| | xspeed/ yspeed | This is the speed in pixel per second for the movement of the background image. This functionality needs a ***Layout*** node over the ***Background2D*** of the current ***Layer2D.*** |
| BR | | *g* field of the current ***Text*** node or the creation of a lent one. |
| BUTTON | | This creates a graphical button which can be represented by a picture in MPEG-4. The size of the button will depend of the image or text it is displayed on it. Then there is a need of a *Form* node over the ***Shape*** for this ***ImageTexture.*** *A* ***TouchSensor*** is embedded in the same ***Shape*** as this button. |
| | accesskey | A ***KeySensor*** is embedded in the same ***Shape*** than this button. This functionality is not yet defined in MPEG-4 and then is subject to change. |
| | disabled | The ***TouchSensor*** *enabled* field is set to FALSE. |
| | name | The ***Shape*** node is named. Use a ***DEF.*** |
| | tabindex | This cannot be managed by MPEG-4 BIFS. This can be managed by MPEG-J for Keyboard control. |
| | type | Only take into account the "button" type otherwise the converter has to ignore the button. |
| | onfocus | The ***TouchSensor*** has a ***ROUTE*** to its *isOver.* |
| | onblur | The ***TouchSensor*** has a ***ROUTE*** to its *isOver.* |
| | value | The converter has to ignore this field. |
| CAPTION | | This is a table caption, only valid in a table HTML element. This is a ***Text*** node which ***FontStyle*** *style* field is set to "ITALIC". |
| | align | This functionality needs a ***Form*** node over this ***Text*** node and the MPEG-4 conversion of the table. This is an horizontal constraint between the table and the ***Text*** node. |
| | valign | This functionality needs a ***Form*** node over this ***Text*** node and the MPEG-4 conversion of the table. This is a vertical constraint between the table and the ***Text*** node. |
| CENTER | | This implies a ***Form*** node with horizontal centering constraint for following converted HTML elements. This can also be managed statically by the converter that knows display settings (size) and then can position the objects by simple X and Y computation. |
| CITE | | This is a new ***Text*** node, in the continuity of the previous one if it exists, with an *ITALIC* ***FontStyle*** display. |
| CODE | | This is a new ***Text*** node, with a ***FontStyle*** which family is set to ["TYPEWRITER", "Courier"]. |
| COL | | This parameter defines visual properties for one or more columns in a 'TABLE' element. |
| | align char charoff valign | These parameters define the default parameters for all cells ('TD' elements) for this column and then have to be stored by the converter. They override the values given in the embedding 'COLGROUP' element. |
| | span | This defines the number of columns affected by this element parameters. |
| | width | This defines the x size of each spanned column and overrides the value given in the embedding 'COLGROUP' element. |
| COLGROUP | | This element defines a set of columns with default attributes values. |
| | align char charoff span valign width | These parameters define the default parameters for all cells ('TD' elements) for this set of columns and then have to be stored by the converter. These attributes can be overridden by the 'COL' element parameters. |
| DD | | This is a new ***Text*** node, with an indentation (contained in a ***Transform2D*** with x translation). |
| DEL | | This is a new ***Text*** node, in the continuity of the previous one, if exists. A ***Form*** node is needed for align an ***IndexedLineSet2D*** onto the text to have a stroke font effect. |
| | cite | This implies the node to be included in an ***Anchor.*** This is the *url* of this ***Anchor.*** |
| | datetime | This is a supplemental information that can be added to the *string* field of the ***Text*** node. |
| | Z | This is a format information for the "datatime" field. |
| DFN | | This is a new ***Text*** node, in the continuity of the previous one if exists, with an *ITALIC* ***FontStyle*** display. |
| DIR | | This is a new ***Text*** node, with an indentation (in a ***Transform2D*** with x translation). |
| DIV | | This defines a new ***Form*** node. |
| | align | This implies that the ***Form*** node has constraints with the borders. |
| DL | | This implies a line feed at opening of this HTML element as well as at the closing, i.e. before the first and after the last MPEG-4 elements converted that defines HTML elements contained in this element. |
| DT | | This is a new Text node, with a *BOLD* ***FontStyle*** display. The color of this Text can also be changed. |
| EM | | This is a new ***Text*** node, in the continuity of the previous one if exists, with an *ITALIC* ***FontStyle*** display. |
| FIELDSET | | This cannot be managed by MPEG-4 BIFS. This can be managed by MPEG-J for Keyboard control. |
| FONT | | This defines a new font style for the following text strings. This should imply then a new ***Text*** node, in the continuity of the previous one if exists. |
| | color | This defines the *emissiveColor* of the ***Material2D*** of the ***Shape*** node in which the ***Text*** node in embedded. |
| | effect | This implies a new ***Text*** node with specific properties. If the value is 'shadow', this new text node is black colored and must be positioned under the current ***Text*** node with an interval for shadow effect. |
| | face | This is the *family* field value of the ***FontStyle.*** |
| | point-size | This is the default *size* field of the ***FontStyle.*** This size is in HTML range (1-7) and then have to be converted in pixel or relative size. |
| | size | This increases or decreases the *size* field of the ***FontStyle*** Node. It has then to be recomputed in pixel or relative size. |
| | transparency | This defines the *transparency* of the ***Material2D*** of the ***Shape*** node in which the ***Text*** node in embedded. A factor of 1/100 has to be applied on the HTML value. |
| FORM | | Basically this element cannot be converted to MPEG-4 at this time because it didn't manage such functionality. In case the KeySensor is normalized, this should be implemented. Another solution is to manage such feature with MPEG-J functionality |
| FRAME | | This implies a new ***Layer2D.*** |
| | bordercolor | This defines the *emissiveColor* of the ***Material2D*** of the ***IndexedLineSet2D*** nodes defined below. |
| | frameborder | If equals to 1, there are ***IndexedLineSet2D*** between all ***Layer2D*** of the parent FRAMESET. |
| | longdesc | This can be ignored. This defines an ***Anchor*** node with a info button as *geometry* on the FRAME's ***Layer2D.*** |
| | marginheight | This implies a ***Form*** node on top of this ***Layer2D*** with constraints with top and bottom borders. |
| | marginwidth | This implies a ***Form*** node on top of this ***Layer2D*** with constraints with left and right borders. The ***Form*** node can be the same than the one described upper with the added constraints. |
| | name | As discussed in the document, when the 'name' or 'target' features are used, this implies all ***Frame2D*** to contain an Inline node which ***DEF*** name is given by this parameter. This allows changing the URL when the content is updated by a hyperlink. |
| | noresize | By default, ***IndexedLineSet2D*** defined upper are in the same grouping node than a ***PlaneSensor2D*** with constraints on x or y moves. This element implies this ***PlaneSensor2D*** not to be added. |
| | scrolling | If "YES", geometric object defined for scrollers have to be shown, not if "NO". if "AUTO", their visibility depends on the ***Layer2D*** content size. |
| | src | This is the address of the content of the top grouping node of the ***Layer2D.*** We have to retrieve the HTML content and we can either integrate the converted content directly into the previous top node or add an ***Inline*** node to the converted content (recommended). |
| FRAMESET | | This defines several ***Layer2D*** contained in the parent ***Layer2D*** node. |
| | border | This implies the parent ***Layer2D*** to contain ***IndexedLineSet2D*** nodes to separate its *children* ***Layer2D.*** Moreover, these ***IndexedLineSet*** are at the same level than a ***PlaneSensor2D*** vertical or horizontal constraints, depending on the frames position. |
| | bordercolor | The ***IndexedLineSet*** defined upper have the given *color.* |
| | cols | This defines the *size* (x-based) fields of the embedded ***Layers2D.*** |
| | frameborder | If "YES", the ***lndexedLineSet2D*** defined upper are to be shown, otherwise not. |
| | framespacing | All embedded ***Layer2D*** have constraints of position between each other of the given pixel size. This implies resizing of the ***Layer2D*** and a ***Transform2D*** as parent node. |
| | onfocus | The parent ***Layer2D*** contains a ***TouchSensor*** with ***ROUTE*** to its *isOver.* |
| | onblur | The parent ***Layer2D*** contains a ***TouchSensor*** with ***ROUTE*** to its *isOver.* |
| | onload | The parent ***Layer2D*** contains a ***VisibilitySensor*** with ***ROUTE*** to its *enterTime.* |
| | onunload | The parent ***Layer2D*** contains a ***VisibilitySensor*** with ***ROUTE*** to its *exitTime.* |
| | rows | This defines the *size* (y-based) fields of the embedded ***Layers2D.*** |
| H1, H2, H3, H4, H5, H6 | | This is a new ***Text*** node, with a fixed size. A carriage return has to be added at the opening as well as at the closing. |
| | align | This implies that a ***Form*** node, which has constraints with the vertical borders, is the parent of this ***Text*** node. |
| | align | This implies that a ***Form*** node, which has constraints with the vertical borders, is the parent of this ***Text*** node. |
| HEAD | | This delimitates the HTML header from the body (visual part). No visual information is created but initialization may be included. |
| HR | | This defines a ***Rectangle*** which parent ***Shape*** node has a ***LineProperties*** which *color field* is '0 0 0' (black). |
| | align | This implies that a ***Form*** node, which has constraints with the vertical borders, is the parent of this ***Rectangle*** node. |
| | color | This is the *emissivecolor* field of the ***Material2D*** defined for the ***Shape*** node. The default color is '1 1 1' (white). |
| | invertborder | This implies the ***Rectangle*** to be drawn differently. |
| | noshade | This implies the ***Rectangle*** to be filled and the remove of the ***LineProperties.*** |
| | size | This is the y *size* of the ***Rectangle.*** |
| | width | This is the x size of the ***Rectangle.*** |
| HTML | | This is the content delimiter. The convertor ignores everything outside this part. |
| I | | This is a new ***Text*** node, in the continuity of the previous one if exists, with an *ITALIC* ***FontStyle*** display. |
| IFRAME | | This is a ***Layer2D*** node. |
| | frameborder | If equals to 1, there is a ***Rectangle*** with default size as the top of the ***Layer2D.*** it is not filled and has a ***LineProperties.*** |
| | height | This is the y *size* of the ***Layer2D.*** |
| | longdesc | This defines an ***Anchor*** node with a info button as *geometry* in the ***Layer2D.*** |
| | marginheight | This implies a ***Form*** node on top of this ***Layer2D*** with constraints with top and bottom borders. |
| | marginwidth | This implies a ***Form*** node on top of this ***Layer2D*** with constraints with left and right borders. The ***Form*** node can be the same than the one described upper with the added constraints. |
| | name | As discussed in the document, when the 'name' or 'target' features are used, this implies all ***Frame2D*** to contain an Inline node which ***DEF*** name is given by this parameter. This allows changing the URL when the content is updated by a hyperlink. |
| | scrolling | If "YES", geometric object defined for scrollers have to be shown, not if "NO". if "AUTO", their visibility depends on the ***Layer2D*** content size. |
| | src | This is the address of the content of the top-grouping node of the ***Layer2D.*** We have to retrieve the HTML content and we can either integrate the converted content directly into the previous top node or add an ***Inline*** node to the converted content (recommended). |
| | width | This is the x *size* of the ***Layer2D.*** |
| IMG | | This is a *Shape* with a ***Rectangle*** *geometry* on which there is an ***ImageTexture, MovieTexture, CompositeTexture2D*** (or ***Layer2D)*** or ***CompositeTexture3D*** (or ***Layer3D),*** depending on the URL type. By default, it is an ***ImageTexture.*** In case the convertor does not understand the URL content type, it can only display the alternative text in a new ***Text*** node. |
| | align | This implies that a ***Form*** node, which has constraints with the vertical borders, is the parent of this ***Shape*** node. |
| | alt | This is the alternative ***Text*** in case the converter cannot manage the URL. This can also be used at application level for display content information as a "tooltip", as done in most cases for ***Anchor*** nodes *description.* |
| | border | In case the value is not 0, this defines that the ***Shape*** has a ***LineProperties*** with the given pixel size (in fact, the double of it). |
| | controls | Can be ignored. In case the URL defines a video clip, we can add some geometrical buttons routed and managed by a ***MediaControl*** node. |
| | dynsrc | This means the URL defines a movie clip or another VRML (MPEG-4) scene. |
| | height | This is the y *size* of the ***Rectangle*** (or Layer). |
| | hspace / vspace | This means the ***ImageTexture*** is applied to a new ***Rectangle*** over this one (and centered) which x and/or y *size* is decreased of the double of the given space. |
| | ismap | The ***Shape*** is in the same grouping node than a ***TouchSensor*** which *touchTime* and *hitPoint*_*changed* are routed. |
| | longdesc | This is the description of the Shape. As for "alt" field, this can be used at application level for display content information as a "tooltip", as done in most cases for ***Anchor*** nodes *description.* |
| | loop | In case of a ***MovieTexture*,** this defines its *loop* field. |
| | loopdelay | This can be ignored. This implies a ***TimeSensor*** and a ***MediaControl*** node in case of a ***MovieTexture.*** |
| | lowsrc | This implies that the URL content has to keep the same *ObjectDescriptor* that the ***Shape's*** one. This content has to be streamed before the main one. |
| | onabort | This implies MPEG-J management. |
| | onerror | This implies MPEG-J management. |
| | onload | The ***Shape*** is at the same level than a ***VisibilitySensor*** with ***ROUTE*** to its *enterTime.* |
| | reload | This indicates (at server side) to the server the frequency at which it has to send the image. This can also be managed on the client side by a ***MediaControl*** node combined with a ***TimeSensor.*** |
| | src | This is the *url* of the texture of the ***Shape.*** The converter has to check whether it can manage the content type or not. |
| | start | In case the value contains "mouseover" and the content is a video clip, the ***Shape*** is in the same grouping node than a ***TouchSensor*** which *isOver* is routed. |
| | transparency | This defines the *transparency* of the ***Material2D*** of the ***Shape*** node. A factor of 1/100 has to be applied on the HTML value. |
| | usemap | This information is used internally by the converter for keeping consistency on the additional ***TouchSensors*** to be applied to the ***Shape*** (Cf. MAP). |
| | width | This is the x *size* of the ***Rectangle*** (or Layer). |
| INPUT | | MPEG-4 BIFS cannot manage this. This can be managed by MPEG-J for Keyboard control if the converter has such functionality. |
| INS | | This is a new ***Text*** node, in the continuity of the previous one, if it exists. A ***Form*** node is needed to align an ***IndexedLineSet2D*** onto the text to have an underlined font effect. |
| | cite | This implies the node to be included in an ***Anchor.*** This is the *url* of this ***Anchor.*** |
| | datetime | This is supplemental information that can be added to the *string* field of the ***Text*** node. |
| | Z | This is format information for the "datatime" field. |
| ISINDEX | | MPEG-4 BIFS cannot manage this. This can be managed by MPEG-J if the converter has such functionality. |
| KBD | | This is a new ***Text*** node, with a ***FontStyle*** which family is set to ["TYPEWRITER", "Courier"]. |
| LABEL | | MPEG-4 BIFS cannot manage this. This can be managed by MPEG-J for Keyboard control if the converter has such functionality. |
| LEGEND | | MPEG-4 BIFS cannot manage this. This can be managed by MPEG-J if the converter has such functionality. |
| LI | | This is a geometrical or textual object in front of a ***Text*** node. |
| | type | If value is "A", "a", "I", "i" or "1", this is a ***Text*** node which *string* is depending on the order of the element in the list. For "circle", "square" and "disc", this can be a ***Shape*** which *geometry* is respectively a non-filled ***Circle*** with ***LineProperties,*** filled ***Rectangle*** and filled ***Circle*** node. A simpler solution is to use specific font, like 'Symbol', which contains already defined characters for such geometric objects. |
| | value | This overrides the automatic value increment by setting the *string* field. |
| LINK | | This has to be taken into account by the converter for visual aspects default settings (stylesheet, etc ...) |
| | charset | Character encoding used for the address. NB: Only UTF-8 is understood by MPEG-4. |
| | href | This is the object to load. This can be stylesheet, table of contents, etc ... |
| | hreflang | Useful to know if linked content language can be understood by the converter. |
| | media | If value is different of "screen" (the default), the whole LINK is ignored by the converter. |
| | rel | This indicates the object type. This involves different behavior of the converter. Here are some types: "Alternate": can be used for language switching at application level. "Stylesheet": to be loaded for default size and font settings. Other types can be implemented in the converter. |
| | rev | Equivalent to "rel" but for reverse relationship. |
| | src | Depending on the relation, this is the URL of the content linked. This can be managed by a button with the relation name in an ***Anchor*** node. |
| | target | As discussed in the document, when the 'name' or 'target' features are used, this implies all ***Frame2D*** to contain an Inline node which ***DEF*** name is given by this parameter. This allows changing the URL when the content is updated by a hyperlink. |
| | type | Used to specify when "rel" has value of "stylesheet". "text/css" is only relevant here for the convertor. Other values imply additional conversion capabilities (JavaScript, etc ...) |
| MAP | | This defines an image map. There is no relevant information here. The converter should only keep reference on the "name" for later node creation (Cf. 'AREA'HTML element) |
| | name | Has to be stored by the converter for later use. |
| MENU | | This only delimitates a menu list. The converter should only keep information on display options: add an indentation for all *sub-****Text*** nodes. |
| | compact | The spacing field of all sub-***Text*** nodes should be decreased. |
| META | | This is either a ***Text*** node (by default) or a ***WorldInfo*** node or implies that the parent *Layer2D* is an ***Inline*** node combined with a ***TimeSensor*** and ***Conditional*** or just some converter status information depending on the "http-equiv" HTML field. |
| | content | In case of a ***Text*** node, this is to be added to the string field. Otherwise this may contain converter setting information. |
| | http-equiv | If "Content-Type", this represents only converter additional information (MIME type). If "Expires", this represents only converter additional information. If "Refresh", this implies that the parent ***Layer2D*** is an ***Inline*** node combined with a ***TimeSensor*** and ***Conditionnal.*** The sensor has a *cyclelnterval* dependending on the content HTML field. The ***Conditional*** and ***Inline*** URL fields depend also on it. If "Set-Cookie", this can be ignored. This implies application or MPEG-J level management. If this HTML field did not exist, this represents a ***WorldInfo*** node. |
| | name | In case of a ***Text*** node, this is to be added to the string field. Otherwise this may contain converter setting information or ***WorldInfo*** additional *info* field. |
| | scheme | This depends on the "http-equiv" and "name" HTML fields. |
| NOFRAMES | | If the converter has reduced functionalities (with no frame/frameset support), this alternative part has to be taken into account and the given message should be displayed. |
| NOSCRIPT | | By default this converter did not manage "SGRIPT" tag, then this alternative message has to be displayed to inform the user. An enhanced functionality converter (with JavaScript support -i.e. "SCRIPT" tag management) can ignore this field. |
| OBJECT | | Depending of the object type, the converter can convert or not the media linked. If it contains non-convertible media, an alternative message is displayed. If the converter has specific conversion capabilities, this element is converted. Such element can contain all kind of media, even media not yet defined that can need extra support or specific plug-in. A specific conversion is then needed. |
| OL | | This only delimitates an object list. The converter should only keep information on display options: add an indentation for all sub-***Text*** nodes. |
| | compact | The spacing field of all ***sub-Text*** nodes should be decreased. |
| | start | Changes the default starting value (1). Used internally by the converter. |
| | type | If value is "A", "a", "I", "i" or "1", all sub-***Text*** nodes *string* fields are preponned depending on the order of the element in the list. For "circle", "square" and "disc", all sub-***Text*** nodes are preponned with a ***Shape*** which *geometry* is respectively a non-filled ***Circle*** with ***LineProperties,*** filled ***Rectangle*** and filled ***Circle*** node. A simpler solution is to use specific font, like 'Symbol', which contains already defined characters for such geometric objects. |
| OPTGROUP | | MPEG-4 BIFS cannot manage this. This can be managed by MPEG-J if the converter has such functionality. |
| OPTION | | MPEG-4 BIFS cannot manage this. This can be managed by MPEG-J if the converter has such functionality. |
| P | | This is only converter information for a paragraph. |
| | align | All sub nodes are included in a ***Form*** node, which has constraints with the Layer2D vertical borders. |
| PARAM | | The conversion of this element depends on the support of 'APPLET' and 'OBJECT' HTML elements by the converter. Default behavior is to ignore this element. |
| PRE | | This is a new ***Text*** node, with no constraint of size or position. |
| | cols / width | This has to be taken into account by the converter to cut the *string* field if needed for the given number of characters. |
| | wrap | This implies the converter has to take into account each sentence length to apply wrapping. |
| Q | | This is a new ***Text*** node, or the continuity of the *string* field of the previous one. |
| | cite | This implies to be a new ***Text*** node embedded in an ***Anchor*** node with the given URL. |
| S | | This is a new ***Text*** node, in the continuity of the previous one, if exists. There is also an ***IndexedLineSet2D*** which length is a constraint with the *Text* length and vertical position with the height. This is done thanks to a ***Form*** node. |
| SAMP | | This is a new ***Text*** node, with a ***FontStyle*** which family is set to ["TYPEWRITER", "Courier"]. |
| SCRIPT | | A converter that does not manage JavaScript ignores this. This can be converted in an enhanced converter implementation or the converter has to display the NOSCRIPT element alternative message. |
| SELECT | | MPEG-4 BIFS cannot manage this. This can be managed by MPEG-J if the converter has such functionality. |
| SMALL | | This is a new ***Text*** node, with a ***FontStyle*** which size is smaller than the normal document one. |
| SPAN | | This is a new ***Text*** node, with display options, which depend on the style that is described. |
| STRIKE | | Cf. the "S" element. |
| STRONG | | This is a new ***Text*** node, with a ***FontStyle*** which *style* has an additional BOLD style. |
| STYLE | | This has to be taken into account by the converter for display options. This can be implemented as PROTO and/or DEFed ***FontStyles*** or ***Material2D.*** |
| | media | If value is different of "screen" (the default), we should ignore the whole STYLE. |
| | type | If "text/css", this is stylesheet definitions. If "text/javascript", it is ignored by non-JavaScript compliant converters. |
| | title | This has to be used has DEF name. |
| SUB | | This is a new ***Text*** node, which FontStyle has a smaller *size* than the default one. This ***Text*** node in embedded in a ***Transform2D*** with an increased *y translation* of half the default ***FontStyle*** *size.* |
| SUP | | This is a new ***Text*** node, which FontStyle has a smaller *size* than the default one. This ***Text*** node in embedded in a ***Transform2D*** with an decreased y *translation* of half the default ***FontStyle*** *size.* |
| TABLE | | Such an element can be converted by multiple mean. A way to simplify this is to create a ***Layer2D*** node embedded in a ***Transform2D*** for each TABLE element. Another way to convert this element is to create a ***Rectangle Shape*** as top *children* of a ***Transform2D*** node. |
| | align | This implies the ***Layer2D*** (or ***Rectangle***) node to be moved in order to be embedded in a new ***Form*** node, which has horizontal constraints, defined by this element. |
| | background | This defines either the *background* field of the ***Layer2D*** node or the ***ImageTexture*** applied to the ***Material2D*** of the ***Rectangle Shape.*** This defines *url* field for an image. |
| | bgcolor | This defines either the *background* field of the ***Layer2D*** node or the *emissiveColor* applied to the ***Material2D*** of the ***Rectangle Shape.*** This defines color for the background. |
| | border | In case of use of a ***Layer2D,*** this defines a new ***Rectangle Shape*** with default size (-2, -2) embedded on top of the ***Layer2D.*** This ***Rectangle's Material2D*** is not *filled* and has a ***LineProperties*** which *width* is defined by this element. In case of use of a ***Rectangle,*** this one has the same properties than the embedded ***Rectangle*** node described before. |
| | bordercolor | This defines the *lineColor* field of the ***LineProperties*** node described before. |
| | bordercolorlight bordercolordark | This needs specific treament. This implies to replace the ***LineProperties*** described before by the use of ***IndexedLineSet2D Shape*** nodes. These nodes are embedded in a ***Form*** node in order to place them at the extremities of the ***Layer2D*** (or the ***Rectangle***)**.** There are four ***IndexedLineSet2D*** (two horizontal and two vertical) on which ***Form*** constraints apply (respectively vertically and horizontally). This defines the *emissiveColor* of the ***Material2D*** of these ***Shape*** nodes. |
| | cellborder | This has to be stored by the converter as pixel width for the boder of all converted cells in the table. |
| | cellpadding | This defines constaints for each cell **(*Rectangle*** or ***Layer2D*)** in the table. The converter has to store this boundary size for later use. |
| | cellspacing | This defines border size for each cell **(*Rectangle*** or ***Layer2D*)** in the table. The converter has to store this border size for later use. |
| | cols | This parameter implies the converter to compute each column width depending on the table width and on the number of columns. |
| | frame | This parameter implies visual changes about which parts of the table will be visible. The converter has to take into account this information. This may need specific treatment for border visibility. Like for the 'bordercolorlight/dark' parameters, the use of ***IndexedLineSet2D*** may be necessary. |
| | gradangle gradcolor | This implies the use of an ***IndexedFaceSet2D*** in the replacement of the ***Layer2D's*** top ***Rectangle*** (in case of the use of a ***Layer2D***) or in the replacement of the ***Rectangle*** defining the table. This ***IndexedFaceSet2D*** is defining the table (rectangle shape) layout. These parameters define the color field of this node and the converter has to compute the colors for each ***Coordinate2D*** (*coord* field) depending on these values. |
| | height width | This defines the y/x size of the ***Layer2D*** or *Rectangle* defining this table. |
| | href | This implies all converted table content to be embedded in an ***Anchor*** node, which *url* is defined by this parameter. |
| | hspace vspace | This defines a new ***Form*** node embedding the ***Layer2D*** or ***Rectangle*** defining the table, which has horizontal/vertical *constraints* with media surrounding the table. |
| | nowrap | This parameter implies the converter not to recompute the x size of the table in case it extends beyond the embedding ***Layer2D*** visibility. |
| | rules | This implies visual changes for the table. The converter has to store this parameter in order to use it later for cell border visibility. |
| | summary | This can be ignored because the converter converts visual information. In case of conversion, the converter can display a new ***Text*** node under or over the converted table. |
| | transparency | Like for the border parameter, this implies the use of an embedded ***Rectangle*** in case of the use of a ***Layer2D*** as table conversion. There is no additional node in case of use of a ***Rectangle*** as table conversion. This defines the ***Material2D*** *transparency* field of this ***Rectangle Shape.*** A division of 100 of the HTML value is necessary for range compatibility. |
| TBODY | | This defines a body part of the table. This implies the converter to check table parts order (header, body and then footer) in order to visually order them. |
| | align | This implies the converter to compute width of cells and the use of a new ***Form*** node that containts all cells in this part. These Form node constraints are defined by this parameter. |
| | char charoff | These define visual parameters. The converter can have to insert a new ***Transform2D*** for each cell in order to visually center them relating to a specific character with an offset defined by 'charoff'. |
| | valign | This defines ***FontStyle*** *justify* field default value for all ***Text*** nodes embedded in the table. |
| TD | | This defines a cell in a table. This can be converted by a ***Layer2D*** but should be better converted by a ***Rectangle*** node. |
| | abbr | This defines a abbreviated version of the cell content. The converter has to compute cell size in order to check whether it needs to display this information or the complete cell content. |
| | absheight abswidth | These parameters define the absolute y/x sizes of the ***Rectangle*** or ***Layer2D*** defining the cell. If the computed cell content size doesn't fit in the cell, part of it can be invisible. As these parameters are not used anymore, the converter can ignore them. |
| | align | This implies the converter to compute width of cells and the use of a new ***Form*** node that embeds all cell contents. These Form node constraints are defined by this parameter. |
| | axis | This defines non-visual data and is moreover not fully normalized in HTML. The converter should then ignore this parameter. |
| | background | Idem than 'background' parameter of 'TABLE' element applied to the cell. |
| | bordercolorlight bordercolordark | Idem than the same parameters for 'TABLE' element applied to the cell. |
| | char charoff | Idem than the same parameters for 'TABLE' element applied to the cell. |
| | colspan rowspan | These indicate that this cell can span from 1 to all columns/row of the table. The converter must store this information in order to display the cell content as required, i.e. spanned to the given number of columns/rows. |
| | gradangle gradcolor | Idem than the same parameters for 'TABLE' element applied to the cell. |
| | height width | These parameters define the absolute y/x sizes of the ***Rectangle*** or ***Layer2D*** defining the cell. |
| | headers | This defines non-visual data and is moreover not fully normalized in HTML. The converter should then ignore this parameter. |
| | maxlines | This parameter defines the maximum number of lines for this cell. If the computed cell content lines number do not fit in the cell, part of it can be invisible. As this parameter is not used anymore, the converter can ignore it. |
| | nowrap | This is visual information the converter has to take into account. This defines that the cell size must match its content size, whatever big it is. |
| | scope | Cf. 'headers' attribute. |
| | transparency | Idem than the same parameter for 'TABLE' element applied to the cell. |
| | valign | Idem than the same parameter for 'TBODY' element applied to the cell. |
| TEXTAREA | | MPEG-4 BIFS cannot manage this. This can be managed by MPEG-J if the converter has such functionality. |
| TFOOT | | Cf. 'TBODY' HTML element applied to footer information. |
| TH | | Cf. 'TD' HTML element applied to header information. The converter has to display these information before 'TD' elements. A "BOLD" *style* value of ***FontStyle*** for embedded ***Text*** nodes should be used. |
| THEAD | | Cf. 'TBODY' HTML element applied to header information. |
| TITLE | | This information has to be used as the *title* field of the ***WorldInfo*** node. |
| TR | | This defines a row in a table and contains the 'TH' and 'TD' HTML elements. The converter has to store this row definition for visual parameters. |
| | align background bordercolorlight bordercolordark char charoff nowrap transparency valign | These parameters define the default parameters for all cells ('TD' elements) for this row and then have to be stored by the converter. |
| | bgcolor | This redefines the 'bgcolor' of the embedding 'TABLE' element. |
| TT | | This is a new ***Text*** node, with a ***FontStyle*** which family is set to ["TYPEWRITER", "Courier"]. |
| U | | This is a new ***Text*** node, in the continuity of the previous one, if it exists. There is also an ***IndexedLineSet2D*** which length is a constraint with the ***Text*** length and positioned under it. This is done thanks to a ***Form*** node. |
| UL | | This only delimitates an unsorted list. The converter should only keep information on display options: add an indentation for all sub-Text nodes and precedates the first one with a carriage return. |
| VAR | | This is a new ***Text*** node, with a ***FontStyle*** which style is set to "ITALIC". |

### Annex 2

| **XHTML/HTML proprietary elements** | | **MPEG-4 node - method to convert** |
|---|---|---|
| AUDIOSCOPE | | This is platform dependant and then should be ignored. |
| BGSOUND | | In case the linked media is understandable by an MPEG-4 platform, this is a ***Sound2D*** node with a unique ***AudioClip.*** |
| | loop | This is the *loop* field of the ***AudioClip*** node. |
| | src | This is the *url* field of the ***AudioClip*** node. |
| BLACKFACE | | This is a new ***Text*** node, with a ***FontStyle*** which *style* is set to "BOLD". Its parent ***Shape*** node contains a ***LineProperties.*** |
| BLINK | | This is a new ***Text*** node, in the continuity of the previous one if it exists. There is a need of a default looping ***TimeSensor*** and a ***Switch*** node to switch on and off the ***Text*** rendering. |
| BQ | | Cf. standard BLOCKQUOTE HTML element. |
| COMMENT | | This defines an HTML comment. Just ignore it or add the comment as MPEG-4 commentary syntax. |
| EMBED | | The node creation depends on the embedded object content type. This can be audio, Java applet, video, VRML, etc ... Then some content can be easily converted, some not at all, because requiring proprietary plug in. In the case the converter can manage it, it creates a ***Layer2D*** or ***Layer3D.*** |
| | align | The Layer(2/3D) is included in a ***Form*** node which has constraints with the parent ***Layer2D*** vertical borders. |
| | border | In case the value is not 0, this defines that there is a top ***Rectangle Shape*** that has a ***LineProperties*** with the given pixel size (in fact, the double of it). |
| | frameborder | If equals to 1, there is a ***Rectangle*** with default size as the top of the Layer. it is not filled and have a ***LineProperties.*** |
| | height | This is the y *size* of the ***Layer2*/*3D.*** |
| | hidden | If TRUE this layer shouldn't be created. |
| | hspace | This is a value for alignment in pixel for horizontal constraints with the borders in the ***Form*** node at the top of the ***Layer2*/*3D*** node and for all nodes in it. |
| | name | This has to be used as DEF name for the Layer content top grouping node. |
| | palette | Just ignore this field. |
| | pluginspage | This should be displayed as a ***Text*** node in an ***Anchor*** node to help user in case the content is not convertible. |
| | pluginurl | Just ignore this field. |
| | src | This implies an ***Inline*** node at the top of the Layer with the given URL. |
| | type | This helps the converter to know if the content type is convertible or not. |
| | units | Has to be used by the converter for size conversions. |
| | vspace | This is a value for alignment in pixel for vertical constraints with the borders in the ***Form*** node at the top of the ***Layer2*/*3D*** node and for all nodes in it. |
| | width | This is the x *size* of the ***Layer2*/*3D.*** |
| FN | | This is a ***Text*** node, in the continuity of the previous one if exists. This can also be ignored because this is a platform specific element. |
| | href | This implies the ***Text*** node to be included in an ***Anchor*** node. |
| | id | This has to be used as DEF name for the text. |
| ILAYER | | This defines a new ***Layer2D.*** |
| | above | This is to be used by the converter to order the ILAYERs one above each other. |
| | background | This is the image to put in the ***Background2D*** node (*url* field) of this layer. |
| | below | This is to be used by the converter to order the ILAYERs one below each other. |
| | bgcolor | This defines the *backColor* to be used in the ***Background2D*** node of this layer. |
| | clip | This defines the *size* of the ***Layer2D.*** This also implies a ***Transform2D*** as parent node of this layer. |
| | height | This defines the y *size* of the ***Layer2D.*** |
| | id | As discussed in the document, when the 'name' or 'target' features are used, this implies all ***Frame2D*** to contain an Inline node which ***DEF*** name is given by this parameter. This allows to change the URL when the content is updated by an hyperlink. |
| | left | This implies a ***Transform2D*** as parent node of this layer. This field defines the x *translation* field. |
| | name | Cf. "id" HTML field. |
| | onfocus | The parent ***Transform2D*** contains a ***TouchSensor*** with ***ROUTE*** to its *isOver.* |
| | onblur | The parent ***Transform2D*** contains a ***TouchSensor*** with ***ROUTE*** to its *isOver.* |
| | onload | This ***Layer2D*** contains a ***VisibilitySensor*** with ***ROUTE*** to its *enterTime.* |
| | onmouseout | The parent ***Transform2D*** contains a ***TouchSensor*** with ***ROUTE*** to its *isOver.* |
| | onmouseover | The parent ***Transform2D*** contains a ***TouchSensor*** with ***ROUTE*** to its *isOver.* |
| | pagex | This implies a ***Transform2D*** as parent node for this layer. This field defines the x *translation* field. Moreover, the ***Transform2D*** is a top node of the top-grouping node **(*Layer2D*).** |
| | pagey | This implies a ***Transform2D*** as parent node for this layer. This field defines the y *translation* field. Moreover, the ***Transform2D*** is a top node of the top-grouping node **(*Layer2D*).** |
| | src | This ***Layer2D*** contains an ***Inline*** node, which link on the given URL. |
| | top | This implies a ***Transform2D*** as parent node for this layer. This field defines the y *translation* field. |
| | visibility | This is information for the converter to decide whether the ***Layer2D*** has to be drawn or not. |
| | width | This defines the x *size* of the ***Layer2D.*** |
| | z-index | This is to be used by the converter to order the ILAYERs. |
| KEYGEN | | MPEG-4 BIFS cannot manage this. This can be managed by MPEG-J if the converter has such functionality. |
| LAYER | | Identical to ILAYER. The only difference is the default positioning. |
| LIMITTEXT | | This has to be used internally to limit the number of character of each sentence. |
| | size | This is the maximum number of displayable characters. |
| | value | This is the Text node to which the restriction has to be applied. |
| | width | This has to be used as *length* for all ***Text*** nodes. |
| LISTING | | Cf. standard PRE HTML element. |
| MARQUEE | | This defines a new ***Text*** node in a parent ***Transform2D*** on which a ***Positionlnterpolator2D*** is applied. There is also a ***Rectangle*** at the same level than the ***Transform2D.*** An additional ***TimeSensor*** is necessary for the animation process. |
| | align | This defines the y *translation* of the ***Transform2D.*** |
| | behaviour | This defines the values inside the ***Positionlnterpolator2D.*** For example, the 'ALTERNATE' value defines a bounce movement of the text from left to right and vice-versa. |
| | bgcolor | This defines the *emissiveColor* field for the ***Shape*** of the ***Rectangle.*** |
| | direction | This defines the values inside the ***Positionlnterpolator2D.*** |
| | height | This defines the y *size* of the ***Rectangle*** and default y *translation* of the ***Transform2D.*** |
| | hspace | This implies a ***Form*** node over the ***Transform2D*** with constraints on the vertical borders. |
| | loop | This defines the *loop* field of the ***TimeSensor*** directing the ***Positionlnterpolator2D.*** |
| | scrollamount | This defines the values inside the ***Positionlnterpolator2D.*** |
| | scrolldelay | Can ignore this. This is renderer dependant. |
| | transparency | This defines the *transparency* field of the ***Shape*** embedding the ***Rectangle.*** |
| | vspace | This implies a ***Form*** node over the ***Transform2D*** with constraints on the horizontal borders. |
| | width | This define the x *size* of the ***Rectangle.*** |
| MULTICOL | | This defines either a ***Form*** node or a ***Layer2D*** node. This is an implementation choice. |
| | cols | This defines the number of vertical layers of a horizontal constraint for the ***Form.*** |
| | gutter | This defines either y *translation* for ***Transform2D*** over the layers or an additional horizontal constraint for the ***Form.*** |
| | width | This defines either y *size* for the layers or an additional horizontal constraint for the ***Form.*** |
| NOBR | | This is only visual setting for the converter in order no to break up lines which length is bigger than the display width. This needs specific string length computation in order to know whether the converter has to break up the sentence within lines. |
| NOEMBED | | This is the alternative ***Text*** node that the converter has to display when the embedded content type is not convertible. |
| NOSMARTQUOTES | | This is platform dependant. The converter can ignore this. |
| PLAINTEXT | | This is a converter setting in order not to interpret embedded HTML elements. Instead of interpreting them, they have to be included in the *string* field of the current ***Text*** node. |
| SERVER | | This should be ignored. It can be however implemented in a specific manner on the server side. |
| SHADOW | | This defines a new ***Text*** node placed "under" the current ***Text*** node which *emissiveColor* is black in order to create a shadow effect. |
| SIDEBAR | | This defines a new ***Layer2D.*** This feature is no longer supported so the converter should ignore this element and display the media within it as it. |
| | align | This defines the x *translation* of the layer's parent ***Transform2D.*** |
| | width | This defines the x *size* of the ***Layer2D.*** |
| SPACER | | This can define either a ***Form*** node or a new ***Transform2D*** node, which embeds the HTML element converted containt. |
| | align | This defines constraints for the *constraints* field of the ***Form*** node or the *translation* field of the ***Transform2D.*** |
| | height | This define vertical *constraints* for the ***Form*** node or y *translation* of ***Transform2D.*** |
| | type | If equals to "VERTICAL" or "HORIZONTAL", this defines respectively vertical and horizontal *constraints* for the ***Form*** node or y and x *translation* of ***Transform2D.*** If equals to "BLOCK", there is a ***Rectangle*** as *children* of the ***Form*** which *size* depends on the "width" and "height" element fields. |
| | width | This defines horizontal *constraints* for the ***Form*** node or x *translation* of ***Transform2D.*** |
| WBR | | This is a visual setting for the converter, which makes it break a line at the given position if the display width is not sufficient to contain the whole sentence. |
| XMP | | Idem as the PLAINTEXT element. |

### Annex 3

| **CSS elements** | | **MPEG-4 node - method to convert** |
|---|---|---|
| azimut | | This defines default fields values for ***Sound*** and ***Sound2D*** nodes, as well as other audio nodes. |
| background | | This defines the default layers' *background* field. If "transparent" is set, there is no ***Background2D*** nor ***Background*** node. |
| | background-color | This defines the *skyColor* of ***Background*** nodes and *backColor* of ***Background2D*** ones. |
| | background-image | This defines the URL fields of ***Background*** nodes and *url* field of ***Background2D*** nodes. |
| | background-repeat | If this is different from "no-repeat", ***Background*** or ***Background2D*** nodes are replaced by a top ***Rectangle*** node with default *size* (-2, -2). |
| | background-attachment | If "fixed", when scrollers are displayed, they don't have ROUTES to the upper ***Layer2D*** parent ***Transform2D.*** |
| | background-position | If different from "top left" (default), ***Background*** or ***Background2D*** nodes are replaced by a top ***Bitmap*** or ***Rectangle*** node. |
| border border-left border-right border-bottom border-top | | This defines default parameters for all object borders i.e. ***IndexedLineSet2D*** and ***LineProperties.*** |
| | border-... -width | This defines the *width* field of ***LineProperties.*** |
| | border-...-style | This defines the *lineStyle* field of ***LineProperties*** nodes. |
| | border-...-color | This defines the *lineColor* field of ***LineProperties*** nodes. |
| | border-spacing | This defines the *translation* field for ***Transform2D*** nodes between two adjacent borders. |
| | border-collapse | This implies a visual aspect for cells display, and then the *translation* field for ***Transform2D*** nodes between two adjacent cells. |
| caption-side | | This implies a visual aspect for the table captions, and then the *translation* field for ***Transform2D*** nodes between the caption and the first cells. |
| clear | | If different from 'none', the converter has to check whether there are elements on sides of the given object. If this is the case, it has to translate the current object in order the constraint to be applied. |
| clip | | This cannot be managed by the current version of MPEG-4. |
| color | | This defines the default color of an XHTML/HTML text element. These values are to be stored by the converter for later use. |
| content | | This defines an ***Inline*** node, which address is given with the url element, or specific content, which is described in the string element, to be put before of after the specified element. |
| counter-increment | | This implies the converter to internally store counters for lists or identifiers. This increases the counter of 1. |
| counter-reset | | This implies the converter to internally store counters for lists or identifiers. This resets the counter (equals it to 0) |
| cue | | This defines new ***Sound2D*** and ***AudioClip*** nodes. |
| | cue-before cue-after | This implies a TimeSensor node between the two objects. |
| cursor | | This cannot be managed by the current version of MPEG-4. This should be managed at application level. |
| direction | | This is the default value of *leftToRight* field for ***FontStyle*** nodes. |
| display | | This defines what the HTML element should display. |
| elevation | | These are spatial parameters for audio nodes. |
| empty-cells | | This is a visual property the converter has to store. This defines the visibility of empty cells. |
| float | | This defines *constraints* for the positioning of object with respect to the other thanks to ***Form*** nodes. Some of these constraints can be impossible to convert. |
| font | | This defines default ***FontStyle*** values. |
| | font-style | This defines the *style* field of the ***FontStyle*** node. |
| | font-variant | In case the value is 'small-caps', this implies decrease of the *size* field of the ***FontStyle*** node for uppercases characters. |
| | font-weight | This defines the *style* field of the ***FontStyle*** node. Some values are impossible to convert. |
| | font-size | This defines the *size* field of the ***FontStyle*** node. |
| | line-height | This defines the *spacing* field of the ***FontStyle*** node. |
| | font-family | This defines the *family* field of the ***FontStyle*** node. |
| @font-face | | This defines a new font face. Basically, it is impossible to create new font faces in MPEG-4. Then, only existing fonts should be taken into account. The default font face should replace others. |
| font-size-adjust | | This is not manageable in MPEG-4. |
| font-stretch | | This implies the ***Text*** node to be embedded in a ***Transform2D*** with a x *scale* factor. This can also be implemented in changing the *length* field of the ***Text*** nodes. |
| height | | This defines the default height for the current element. Basically, MPEG-4 cannot manage this constraint. This can be implemented as a new ***Layer2D*** which *size* is the given value. |
| @import | | This implies the converter to download the given URL in order to retrieve another stylesheet definition document. |
| left right bottom top | | These define *constraints* of ***Form*** nodes for geometrical nodes relatively to their parent containing node. In case the value is different from 'auto', this then implies that all geometrical nodes are embedded in a ***Form*** node. |
| letter-spacing | | This is basically not a feature of MPEG-4. This can be implemented in the way the converter manages the text character by character in ***Text*** nodes. |
| line-height | | This is the minimum *spacing* field value for ***FontStyle.*** |
| list-style | | This defines the list style for listing HTML elements. |
| | list-style-type | This defines the type of the list: either a geometrical object (***Shape*** node) or a textual (***Text*** node). |
| | list-style-position | This defines new ***Transform2D*** and ***Form*** nodes for all embedded text lines. |
| | list-style-image | This defines an ***ImageTexture*** as list item marker. |
| margin margin-top margin-bottom margin-left margin-right | | This defines the width for all margins **(*LineProperties*** and ***IndexedLineSet2D*).** |
| marker-offset | | This implies a new ***Form*** node with *constraints* between list markers and following ***Text.*** |
| max-height min-height max-width min-width | | These are vertical and horizontal *constraints* for all geometrical nodes, which have to be embedded in a ***Form*** node. |
| orphans widows | | This defines the number of lines the converter has to put at the end and/or the begin of the ***Layer2D.*** |
| outline | | These define the default values for ***LineProperties.*** |
| | outline-color | This defines the *lineColor* field. |
| | outline-style | This defines the *lineStyle* field. Some styles can be non-convertible. |
| | outline-width | This defines the *width* field. |
| overflow | | This cannot be basically managed by MPEG-4. A partial implementation can be to use additional ***Layer2D*** to clip the content. |
| padding padding-top padding-bottom padding-left padding-right | | This defines *constraints* for new ***Form*** nodes for geometrical nodes. |
| page | | This defines a new ***Layer2D*** and ***IndexedLineSet2D.*** |
| page-break before page-break-after page-break-inside | | This defines new ***IndexedLineSet2D*.** with ***Form*** *constraints.* |
| pause pause-after pause-before | | The converter should ignore this. This can be implemented with BIFS update commands. |
| pitch | | This defines default *pitch* field value for ***AudioClip*** nodes. |
| play-during | | This defines the *loop* field for ***AudioClip*** nodes. |
| position | | This defines *constraints* for geometrical nodes embedded in ***Form*** nodes. |
| quotes | | This is an information the converter has to store as default HTML 'Q' element quotes. |
| size | | This is an information the converter has to store for later page break purpose. |
| table-layout | | This defines the way the table cells are drawn. This is converter visual information. |
| text-align | | This defines new ***Form*** nodes with horizontal *constraints* with the vertical borders. |
| text-decoration | | This defines the way text is displayed. Possible values are: 'none': nothing more is required than the ***Text*** node. 'underline', 'overline', 'line-through': an ***IndexedLineSet2D*** and ***Form*** nodes will be needed to put a line respectively under, over and on the middle of the ***Text*** node (vertically). |
| text-indent | | This can be implemented either by a parent ***Transform2D*** node with a x translation or by a parent ***Form*** node with *constraints* with the ***Layer2D*** left border. |
| text-shadow | | This defines a new Text node, which string field is the same. This new ***Text*** node has a parent ***Transform2D*** with a translation of the given position. The *emissiveColor* of the ***Shape*** can be also provided. |
| text-transform | | This is an information the converter has to store in order to transform some ***Text*** *string* characters into uppercase or lowercase. |
| unicode-bidi | | This defines the text format. MPEG-4 only manages UTF8 characters. |
| vertical-align | | This defines *constraints* for ***Form*** nodes embedding geometrical objects. Some *constraints* may be non-convertible. |
| visibility | | This is an information the converter has to store in order to display or not the content. |
| white-space | | This is an information the converter has to store as text behavior. This can imply the converter to manage Text nodes character by character. |
| width | | This defines *constraints* for geometrical objects embedded in a ***Form*** node. |
| word-spacing | | This is basically not a feature of MPEG-4. This can be implemented in the way the converter manages the text word by word in ***Text*** nodes. |
| z-index | | This implies either a new ***OrdererGroup*** node or the converter has to re-order the children nodes to follow the drawing index order. |

## Claims

1. Device to treat HTML information including data and at least one page and its associated frame layout, comprising
- means to generate a structure of the HTML data,
**characterized in that** it comprises:
- means to convert the HTML page and its associated frame layout into MPEG4 layout,
- means to convert the HTML data into MPEG-4 nodes.

2. Device according to claim 1 **characterized in that** the means to generate a structure of the HTML data are able to generate a tree structure of the HTML data and that the conversion means intended to convert the HTML data into MPEG-4 nodes convert the HTML tags and the cascading style sheets to Binary Information For Scene information.

3. Device according to any of claims 1 or 2 **characterized in that** the HTML data are standardized HTML data or browser-specific HTML data.

4. Device according to any of claims 1 or 3 **characterized in that** it comprises means to generate an output document (19) from the obtained MPEG-4 layout and MPEG-4 nodes, said output, document being described using the MP4 format or the XMT format.

5. Multimedia system **characterized in that** it comprises:
- at least one browser (3) to generate a request of at least one HTML document (9) located on a remote server (5),
- at least one device (1) according to any of claims 1 to 4,
- at least one transmission link (6) between said remote server (5) and said device (1) according to claim 1 for transferring said requested HTML document (9),
- at least one display (4) to display said MPEG-4 document (19),
said device according to claim 1 to convert said requested HTML document (9) into an MPEG-4 document (19) before transferring it to said display (4).

6. Multimedia system **characterized in that** it includes:
- a server (7),
- a device for displaying multimedia data (2),
- a device for receiving a request for an HTML document from a user (3),
- a transmission link (8) being able to for connecting said server (7) and said device (3) for receiving the request for transmitting said request to said server (7),
said server (7) including a device according to any of claims 1 to 4 for converting said HTML document (9) into an MPEG-4 document (19), said transmission link (8) transmitting said HTML document (9) converted into MPEG-4 to the device (2) for displaying multimedia data.

7. Multimedia system according to one of claims 4 to 5 **characterized in that** the server is intended to be connected to the World Wide Web (5) and **in that** said requested HTML document (9) is located on the World Wide Web (5).

8. Method for treating HTML information including at least one page and its associated frame layout wherein
- one generates a structure of the HTML data,
**characterized in that**
- one converts the HTML page and frame layout into MPEG4 layout,
- one converts the HTML data into MPEG-4 nodes.

9. Computer program product comprising portions of software code or program instructions adapted to implement the method of claim 8 for converting HTML data into MPEG-4 data, when the computer program is executed on a computer.
